# EUROPEAN PATENT APPLICATION

(11) **EP 4 269 490 A1**
(43) Date of publication of application: **01.11.2023**
(21) Application number: 21910235.7
(22) Date of filing: 03.12.2021
(51) Int. Cl.: C08K 5/13, C08K 5/34, C08L 13/00, H01M 4/13, H01M 4/62

(54) **BINDER COMPOSITION FOR NON-AQUEOUS SECONDARY BATTERY NEGATIVE ELECTRODE, SLURRY COMPOSITION FOR NON-AQUEOUS SECONDARY BATTERY NEGATIVE ELECTRODE, NON-AQUEOUS SECONDARY BATTERY NEGATIVE ELECTRODE AND METHOD FOR PRODUCING SAME, AND NON-AQUEOUS SECONDARY BATTERY**

(30) Priority: 25.12.2020 JP 2020217924
(71) Applicant: Zeon Corporation, Tokyo 100-8246 (JP)
(72) Inventor: TANAKA Keiichiro, Tokyo 100-8246 (JP)
(74) Representative: Maiwald GmbH
(86) International application number: PCT/JP2021/044559
(87) International publication number: WO 2022/138085

(57) **Abstract**

A binder composition for a non-aqueous secondary battery negative electrode contains a particulate binder and an aromatic ring-fused nitrogen-containing five-membered ring compound or an aromatic-substituted nitrogen-containing five-membered ring compound. The particulate binder includes at least an aromatic vinyl monomer unit and an aliphatic conjugated diene monomer unit. The aromatic ring-fused nitrogen-containing five-membered ring compound or the aromatic-substituted nitrogen-containing five-membered ring compound is an anionic aromatic compound having 4n+2 ring π electrons (n is an integer of 1 or more). The content of the anionic aromatic compound is more than 1 part by mass and less than 10 parts by mass per 100 parts by mass of the particulate binder.

## Description

### TECHNICAL FIELD

The present disclosure relates to a binder composition for a non-aqueous secondary battery negative electrode, a slurry composition for a non-aqueous secondary battery negative electrode, a negative electrode for a non-aqueous secondary battery and method of producing the same, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide variety of applications.

An electrode used in a non-aqueous secondary battery such as a lithium ion secondary battery generally includes a current collector and an electrode mixed material layer formed on the current collector. This electrode mixed material layer is formed by, for example, applying a slurry composition containing an electrode active material, a binder-containing binder composition, and so forth onto the current collector, and then drying the applied slurry composition.

Attempts have been made to improve binder compositions used in the formation of electrode mixed material layers in order to achieve further improvement of secondary battery performance. For example, Patent Literature (PTL) 1 proposes a secondary battery binder that is easy to handle during a production process, that can display a binding effect and impart good physical properties to a constituent member of a battery such as an electrode active material layer when added in a small amount, and that displays little degradation inside of a secondary battery and can stably provide a secondary battery having long life. Specifically, the binder described in PTL 1 contains a polymer that is obtained by using a water-soluble polymerization initiator to perform polymerization in an aqueous medium with respect to a monomer composition that includes a conjugated diene monomer and an acid monomer and in which the proportion constituted by the acid monomer is 5 mass% to 20 mass%. Moreover, the amount of the water-soluble polymerization initiator that remains in the binder is 100 ppm or less as a weight ratio relative to the polymer, and 0.05 parts by weight to 5 parts by weight of an antioxidant is included per 100 parts by weight of the polymer.

### CITATION LIST

### Patent Literature

PTL 1: JP2012-14920A

### SUMMARY

### (Technical Problem)

In recent years, there has been demand for densification of electrodes used in secondary batteries so as to improve electrical characteristics of secondary batteries. However, there have been instances in which densification of a negative electrode formed using a slurry composition that contains a conventional binder composition has made it difficult for electrolyte solution to permeate into an electrode mixed material layer. There is also room for further improvement of conventional secondary battery negative electrodes in terms of increasing binding capacity between a negative electrode mixed material layer and a current collector (hereinafter, referred to as "peel strength") and reducing internal resistance of a secondary battery.

Accordingly, one object of the present disclosure is to provide a binder composition for a non-aqueous secondary battery negative electrode and a slurry composition for a non-aqueous secondary battery negative electrode that can be used to produce a negative electrode that has excellent electrolyte solution injectability and peel strength and that can reduce internal resistance of a non-aqueous secondary battery.

Another object of the present disclosure is to provide a negative electrode for a non-aqueous secondary battery that has excellent electrolyte solution injectability and peel strength and can reduce internal resistance of a non-aqueous secondary battery, and also to provide a method of producing this negative electrode for a non-aqueous secondary battery.

Yet another object of the present disclosure is to provide a non-aqueous secondary battery having reduced internal resistance.

### (Solution to Problem)

The inventor conducted diligent investigation with the aim of solving the problems set forth above. The inventor focused on the fact that when a slurry composition containing a conventional binder composition is applied onto a current collector, a binder that is contained in the applied binder composition migrates during drying of the binder composition, and, as a result, becomes concentrated in a surface layer of the obtained negative electrode mixed material layer, thereby leading to reduction of electrolyte solution injectability of a negative electrode. The inventor made a new discovery that when a compound having an anionic heterocyclic moiety that displays aromaticity is added to a binder composition in a specific amount, concentration of a binder in a surface layer of a negative electrode mixed material layer is reduced, permeation of electrolyte solution into the negative electrode mixed material layer is thereby facilitated, and, as a result, electrolyte solution injectability of a negative electrode improves. In this manner, the inventor completed the present disclosure.

Specifically, the present disclosure aims to advantageously solve the problems set forth above, and a presently disclosed binder composition for a non-aqueous secondary battery negative electrode comprises: a particulate binder; and an aromatic ring-fused nitrogen-containing five-membered ring compound or an aromatic-substituted nitrogen-containing five-membered ring compound, wherein the particulate binder includes at least an aromatic vinyl monomer unit and an aliphatic conjugated diene monomer unit, the aromatic ring-fused nitrogen-containing five-membered ring compound or the aromatic-substituted nitrogen-containing five-membered ring compound is an anionic aromatic compound having 4n+2 ring π electrons with a proviso that n is an integer of 1 or more, and content of the anionic aromatic compound is more than 1 part by mass and less than 10 parts by mass per 100 parts by mass of the particulate binder. Through a binder composition for a non-aqueous secondary battery negative electrode that contains a particulate binder having a specific chemical composition and an anionic aromatic compound having a specific structure in the specific proportions set forth above in this manner, it is possible to produce a negative electrode that has excellent electrolyte solution injectability and peel strength and that can reduce internal resistance of a non-aqueous secondary battery by using a slurry composition for a non-aqueous secondary battery negative electrode containing this binder composition for a non-aqueous secondary battery negative electrode.

Note that when a particulate binder is said to "include a monomer unit" in the present disclosure, this means that "a polymer obtained using that monomer includes a repeating unit derived from the monomer".

In the presently disclosed binder composition for a non-aqueous secondary battery negative electrode, the anionic aromatic compound is preferably represented by formula (A) or formula (B), shown below.

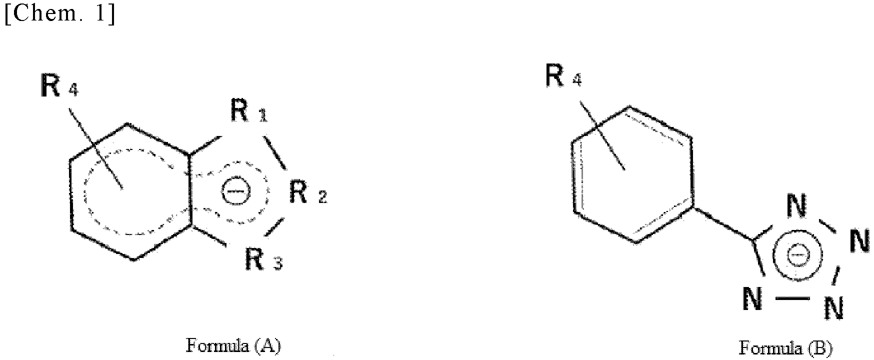

(In formula (A) and formula (B), R₁ to R₃ are carbon atoms, at least one of R₁ to R₃ is a nitrogen atom, and R₄ represents a hydrogen atom or an alkyl group having a carbon number of not less than 1 and not more than 3.)

By using an anionic aromatic compound represented by formula (A) or formula (B), shown above, it is possible to further improve electrolyte solution injectability of a negative electrode.

The presently disclosed binder composition for a non-aqueous secondary battery negative electrode preferably further comprises a phenolic antioxidant. By using a binder composition for a non-aqueous secondary battery negative electrode that further contains a phenolic antioxidant, it is possible to further improve peel strength of a negative electrode.

In the presently disclosed binder composition for a non-aqueous secondary battery negative electrode, the anionic aromatic compound preferably includes a pyrrole ring, a pyrazole ring, an imidazole ring, a triazole ring, or a tetrazole ring. By using an anionic aromatic compound that includes a pyrrole ring, a pyrazole ring, an imidazole ring, a triazole ring, or a tetrazole ring, it is possible to even further improve electrolyte solution injectability of a negative electrode.

Moreover, the present disclosure aims to advantageously solve the problems set forth above, and a presently disclosed slurry composition for a non-aqueous secondary battery negative electrode comprises any one of the binder compositions for a non-aqueous secondary battery negative electrode set forth above. The presently disclosed slurry composition for a non-aqueous secondary battery negative electrode preferably comprises a negative electrode active material. By using a slurry composition for a non-aqueous secondary battery negative electrode that contains the presently disclosed binder composition for a non-aqueous secondary battery negative electrode and a negative electrode active material, it is possible to produce a negative electrode that has excellent electrolyte solution injectability and peel strength and that can reduce internal resistance of a secondary battery.

Furthermore, the present disclosure aims to advantageously solve the problems set forth above, and a presently disclosed negative electrode for a non-aqueous secondary battery comprises a negative electrode mixed material layer formed using the presently disclosed slurry composition for a non-aqueous secondary battery negative electrode that contains the presently disclosed binder composition for a non-aqueous secondary battery negative electrode and a negative electrode active material. A negative electrode that includes a negative electrode mixed material layer formed using the presently disclosed slurry composition for a non-aqueous secondary battery negative electrode that contains the presently disclosed binder composition for a non-aqueous secondary battery negative electrode and a negative electrode active material has excellent electrolyte solution injectability and peel strength and can reduce internal resistance of a secondary battery.

Also, the present disclosure aims to advantageously solve the problems set forth above, and a presently disclosed non-aqueous secondary battery comprises the negative electrode for a non-aqueous secondary battery set forth above. A non-aqueous secondary battery that includes the presently disclosed negative electrode for a non-aqueous secondary battery has reduced internal resistance.

Moreover, the present disclosure aims to advantageously solve the problems set forth above, and a presently disclosed method of producing a negative electrode for a non-aqueous secondary battery comprises forming a negative electrode mixed material layer using the presently disclosed slurry composition for a non-aqueous secondary battery negative electrode set forth above that contains the presently disclosed binder composition for a non-aqueous secondary battery negative electrode and a negative electrode active material. Through the presently disclosed method of producing a negative electrode for a non-aqueous secondary battery, it is possible to efficiently produce a negative electrode for a non-aqueous secondary battery that has excellent electrolyte solution injectability and peel strength and that can reduce internal resistance of a secondary battery.

### (Advantageous Effect)

According to the present disclosure, it is possible to provide a binder composition for a non-aqueous secondary battery negative electrode and a slurry composition for a non-aqueous secondary battery negative electrode that can be used to produce a negative electrode that has excellent electrolyte solution injectability and peel strength and that can reduce internal resistance of a non-aqueous secondary battery.

Moreover, according to the present disclosure, it is possible to provide a negative electrode for a non-aqueous secondary battery that has excellent electrolyte solution injectability and peel strength and can reduce internal resistance of a non-aqueous secondary battery, and also to provide a method of producing this negative electrode for a non-aqueous secondary battery.

Furthermore, according to the present disclosure, it is possible to provide a non-aqueous secondary battery having reduced internal resistance.

### DETAILED DESCRIPTION

The following provides a detailed description of embodiments of the present disclosure.

The presently disclosed binder composition for a non-aqueous secondary battery negative electrode can be used in production of the presently disclosed slurry composition for a non-aqueous secondary battery negative electrode. Moreover, the presently disclosed slurry composition for a non-aqueous secondary battery negative electrode can be used in production of a negative electrode of a non-aqueous secondary battery such as a lithium ion secondary battery. Furthermore, the presently disclosed negative electrode for a non-aqueous secondary battery can be produced according to the presently disclosed method of producing a negative electrode for a non-aqueous secondary battery. Also, the presently disclosed negative electrode for a non-aqueous secondary battery includes a negative electrode mixed material layer formed using the presently disclosed slurry composition for a non-aqueous secondary battery negative electrode. Moreover, a feature of the presently disclosed non-aqueous secondary battery is that it includes the presently disclosed negative electrode for a non-aqueous secondary battery.

### (Binder composition for non-aqueous secondary battery negative electrode)

The presently disclosed binder composition for a non-aqueous secondary battery negative electrode (hereinafter, also referred to simply as a "binder composition") contains a particulate binder and an aromatic ring-fused nitrogen-containing five-membered ring compound or an aromatic-substituted nitrogen-containing five-membered ring compound, and may optionally contain other components that can be compounded in secondary battery negative electrodes. Note that the presently disclosed binder composition normally further contains a dispersion medium such as water.

Features of the presently disclosed binder composition are that the particulate binder includes at least an aromatic vinyl monomer unit and an aliphatic conjugated diene monomer unit, that the aromatic ring-fused nitrogen-containing five-membered ring compound or the aromatic-substituted nitrogen-containing five-membered ring compound is an anionic aromatic compound having 4n+2 ring π electrons (n is an integer of 1 or more), and that the content of the anionic aromatic compound is more than 1 part by mass and less than 10 parts by mass per 100 parts by mass of the particulate binder.

As a result of the presently disclosed binder composition containing specific amounts of a particulate binder having the specific chemical composition set forth above and an anionic aromatic compound having the specific structure set forth above, it is possible to produce a negative electrode that has excellent electrolyte solution injectability and peel strength and that can reduce internal resistance of a secondary battery by using a slurry composition for a non-aqueous secondary battery negative electrode (hereinafter, also referred to simply as a "slurry composition") containing this binder composition. Although it is not certain why the above-described effect is obtained by using a binder composition that contains the above-described particulate binder and anionic aromatic compound, the reason for this is presumed to be as follows.

When a slurry composition that contains the presently disclosed binder composition is applied onto a current collector, the anionic aromatic compound adsorbs onto the surface of the current collector, thereby causing the particulate binder to also migrate toward the surface of the current collector through interactions between the anionic aromatic compound and the particulate binder. This is thought to increase the amount of the particulate binder that is present in proximity to the surface of the current collector in a negative electrode mixed material layer obtained through drying of the applied slurry composition and thereby reduce non-uniformity of distribution of the particulate binder inside the negative electrode mixed material layer, which facilitates permeation of electrolyte solution and, as a result, improves both electrolyte solution injectability and peel strength of a negative electrode. Moreover, the inclusion of such a negative electrode is thought to reduce internal resistance of a secondary battery.

### <Particulate binder>

The particulate binder is a component that, when a negative electrode is produced using a slurry composition that contains the presently disclosed binder composition, can hold components (for example, a negative electrode active material) contained in a negative electrode mixed material layer so that these components do not detach from the negative electrode.

The particulate binder is present in a particulate form in the binder composition and in the subsequently described slurry composition. Moreover, the particulate binder includes an aromatic vinyl monomer unit and an aliphatic conjugated diene monomer unit as previously described and may optionally include monomer units other than an aromatic vinyl monomer unit and an aliphatic conjugated diene monomer unit (hereinafter, referred to as "other monomer units").

### [Aromatic vinyl monomer unit]

Examples of aromatic vinyl monomers that can form an aromatic vinyl monomer unit include, but are not specifically limited to, styrene, α-methylstyrene, vinyltoluene, and divinylbenzene. Of these aromatic vinyl monomers, styrene is preferable from a viewpoint of increasing mechanical strength of an obtained negative electrode. One of these aromatic vinyl monomers may be used individually, or two or more of these aromatic vinyl monomers may be used in combination.

The proportion constituted by aromatic vinyl monomer units included in the particulate binder when the amount of all monomer units in the particulate binder is taken to be 100 mass% is preferably 5 mass% or more, more preferably 15 mass% or more, and even more preferably 20 mass% or more, and is preferably 70 mass% or less, more preferably 68 mass% or less, and even more preferably 65 mass% or less. When the proportional content of aromatic vinyl monomer units is not less than any of the lower limits set forth above, stability of a slurry composition that contains the binder composition improves. Moreover, when the proportional content of aromatic vinyl monomer units is not more than any of the upper limits set forth above, peel strength of a negative electrode that is produced using a slurry composition containing the binder composition can be further increased.

### [Aliphatic conjugated diene monomer unit]

Examples of aliphatic conjugated diene monomers that can form an aliphatic conjugated diene monomer unit include, but are not specifically limited to, 1,3-butadiene, 2-methyl-1,3-butadiene (also referred to as "isoprene"), 2,3-dimethyl-1,3-butadiene, 2-chloro-1,3-butadiene, substituted linear conjugated pentadienes, and substituted and branched conjugated hexadienes. Of these aliphatic conjugated diene monomers, 1,3-butadiene and isoprene are preferable, and 1,3-butadiene is more preferable. One of these aliphatic conjugated diene monomers may be used individually, or two or more of these aliphatic conjugated diene monomers may be used in combination.

The proportion constituted by aliphatic conjugated diene monomer units included in the particulate binder when the amount of all monomer units in the particulate binder is taken to be 100 mass% is preferably 20 mass% or more, more preferably 25 mass% or more, and even more preferably 30 mass% or more, and is preferably 80 mass% or less, more preferably 55 mass% or less, and even more preferably 50 mass% or less. When the proportional content of aliphatic conjugated diene monomer units is not less than any of the lower limits set forth above, peel strength of a negative electrode that is produced using a slurry composition containing the binder composition can be further increased. Moreover, when the proportional content of aliphatic conjugated diene monomer units is not more than any of the upper limits set forth above, stability of a slurry composition that contains the binder composition further improves.

### <Other monomer units>

No specific limitations are placed on other monomer units so long as they are monomer units derived from monomers other than the aromatic vinyl monomers and aliphatic conjugated diene monomers described above. However, from a viewpoint of improving binding capacity of the particulate binder, it is preferable that the particulate binder is acid modified. More specifically, it is preferable that the particulate binder includes an acid group-containing monomer unit such as a carboxy group-containing monomer unit or a hydroxy group-containing monomer unit as another monomer unit in addition to an aromatic vinyl monomer unit and an aliphatic conjugated diene monomer unit.

### -Carboxy group-containing monomer unit-

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can also be used as a carboxy group-containing monomer.

Other examples of carboxy group-containing monomers include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate. Of these examples, acrylic acid and methacrylic acid are preferable as carboxy group-containing monomers. One of these carboxy group-containing monomers may be used individually, or two or more of these carboxy group-containing monomers may be used in combination.

Although no specific limitations are placed on the proportion constituted by carboxy group-containing monomer units included in the particulate binder, when the amount of all monomer units in the particulate binder is taken to be 100 mass%, the proportion constituted by carboxy group-containing monomer units is preferably 1 mass% or more, and more preferably 3 mass% or more, and is preferably 20 mass% or less, and more preferably 10 mass% or less.

### -Hydroxy group-containing monomer unit-

Examples of hydroxy group-containing monomers that can form a hydroxy group-containing monomer unit include 2-hydroxyethyl acrylate, 2-hydroxyethyl methacrylate, 2-hydroxypropyl acrylate, 2-hydroxypropyl methacrylate, N-hydroxymethylacrylamide (N-methylolacrylamide), N-hydroxymethylmethacrylamide, N-hydroxyethylacrylamide, and N-hydroxyethylmethacrylamide. Of these hydroxy group-containing monomers, 2-hydroxyethyl acrylate is preferable. One of these hydroxy group-containing monomers may be used individually, or two or more of these hydroxy group-containing monomers may be used in combination.

### «Volume-average particle diameter»

The volume-average particle diameter of the particulate binder is preferably 80 nm or more, more preferably 100 nm or more, and even more preferably 120 nm or more, and is preferably 500 nm or less, more preferably 450 nm or less, and even more preferably 350 nm or less. When the volume-average particle diameter of the particulate binder is not less than any of the lower limits set forth above, electrolyte solution injectability of a negative electrode can be further improved, and internal resistance of a secondary battery can be further reduced. Moreover, when the volume-average particle diameter of the particulate binder is not more than any of the upper limits set forth above, peel strength of a negative electrode can be further improved.

Note that the "volume-average particle diameter" referred to in the present disclosure is the particle diameter (D50) at which, in a particle size distribution (by volume) measured by laser diffraction, cumulative volume calculated from a small diameter end of the distribution reaches 50%. The volume-average particle diameter of a particulate binder can be measured by a method described in the EXAMPLES section.

### <<Production of particulate binder>>

The particulate binder can be produced through polymerization of a monomer composition containing the monomers described above, carried out in an aqueous solvent, for example. Note that the proportional content of each monomer in the monomer composition can be set in accordance with the proportional contents of monomer units in the particulate binder.

Moreover, the aqueous solvent used in polymerization is not specifically limited so long as the particulate binder can be dispersed therein in a particulate form. Water may be used individually as the aqueous solvent, or a mixed solvent of water and another solvent may be used as the aqueous solvent.

The mode of polymerization is not specifically limited and may, for example, be any of solution polymerization, suspension polymerization, bulk polymerization, and emulsion polymerization. The polymerization method may, for example, be ionic polymerization, radical polymerization, living radical polymerization, or the like.

Commonly used emulsifiers, dispersants, polymerization initiators, polymerization aids, and the like may be used in the polymerization in an amount that is also the same as commonly used.

### <Aromatic ring-fused nitrogen-containing five-membered ring compound and aromatic-substituted nitrogen-containing five-membered ring compound>

The aromatic ring-fused nitrogen-containing five-membered ring compound and the aromatic-substituted nitrogen-containing five-membered ring compound are each an anionic aromatic compound having 4n+2 ring π electrons, where "n" in "4n+2" is an integer of 1 or more, and is preferably 3 or less.

### «pH of anionic aromatic compound»

The pH of the anionic aromatic compound is preferably not lower than 7 and not higher than 10, more preferably 9 or lower, and even more preferably 8 or lower. When the pH of the anionic aromatic compound is not lower than the lower limit set forth above, peel strength of a negative electrode can be further improved. Moreover, when the pH of the anionic aromatic compound is not higher than any of the upper limits set forth above, stability of a slurry composition improves, and thus a negative electrode active material has a lower tendency to be influenced by the slurry composition when the negative electrode active material is compounded with the slurry composition.

Note that the pH of an anionic aromatic compound can be measured using a desktop pH meter (F-51 produced by Horiba, Ltd.) after the desktop pH meter has been calibrated with pH reference solutions (pH 4, pH 7, and pH 9).

### <Aromatic ring-fused nitrogen-containing five-membered ring compound>

From a viewpoint of improving electrolyte solution injectability of a negative electrode, the aforementioned aromatic ring-fused nitrogen-containing five-membered ring compound is preferably a compound represented by the following formula (A).

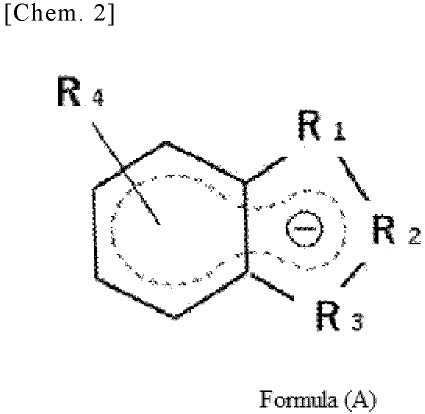

In formula (A), R₁ to R₃ are carbon atoms and at least one of R₁ to R₃ is a nitrogen atom (N), and it is preferable that at least two of R₁ to R₃ are nitrogen atoms. Moreover, R₄ represents a hydrogen atom (H) or an alkyl group having a carbon number of 1 to 3, and is preferably a hydrogen atom or has a carbon number of 1. In the case of an aromatic ring-fused nitrogen-containing five-membered ring compound represented by formula (A), the two rings that are included in the aromatic ring-fused nitrogen-containing five-membered ring compound have 10 π electrons. Note that it is preferable that the aromatic ring-fused nitrogen-containing five-membered ring compound does not include a heteroatom (for example, sulfur (S), boron (B), or phosphorus (P)) other than a nitrogen atom (N).

### <Aromatic-substituted nitrogen-containing five-membered ring compound>

From a viewpoint of improving electrolyte solution injectability of a negative electrode, the aforementioned aromatic-substituted nitrogen-containing five-membered ring compound is preferably a compound represented by the following formula (B).

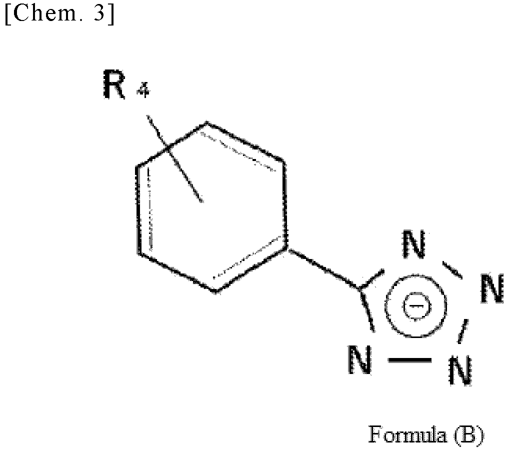

R₄ in formula (B) has the same meaning as R₄ in formula (A). In the case of an aromatic-substituted nitrogen-containing five-membered ring compound represented by formula (B), the nitrogen-containing five-membered ring has 6 π electrons.

The anionic aromatic compound preferably includes a pyrrole ring, a pyrazole ring, an imidazole ring, a triazole ring, or a tetrazole ring, and, in particular, preferably includes an imidazole ring or a triazole ring.

The above-described anionic aromatic compound having 4n+2 ring π electrons that is an aromatic ring-fused nitrogen-containing five-membered ring compound or an aromatic-substituted nitrogen-containing five-membered ring compound may, for example, be benzotriazole, benzimidazole, 7-methyl-1H-benzotriazole, indole, or the like, of which, benzotriazole and 7-methyl-1H-benzotriazole are preferable.

### [Content of anionic aromatic compound]

The content of the anionic aromatic compound in the presently disclosed binder composition is required to be more than 1 part by mass and less than 10 parts by mass per 100 parts by mass of the particulate binder, and is preferably 8 parts by mass or less, more preferably 5 parts by mass or less, and more preferably 2 parts by mass or less per 100 parts by mass of the particulate binder. When the content of the anionic aromatic compound is more than the lower limit set forth above, electrolyte solution injectability of a negative electrode can be further improved. Moreover, when the content of the anionic aromatic compound is not more than any of the upper limits set forth above, internal resistance of a secondary battery can be further reduced.

### <Other components>

In addition to the components described above, the presently disclosed binder composition may contain known optional components that can be contained in a binder composition. Examples of other components include phenolic antioxidants, phosphite antioxidants, dispersion stabilizers, thickeners, conductive materials, reinforcing materials, leveling agents, additives for electrolyte solution, water-soluble polymers such as carboxymethyl cellulose (CMC) and polyacrylic acid, and defoamers. Of these other components, a phenolic antioxidant is preferably included from a viewpoint of improving peel strength of a negative electrode. Commonly known examples of such other components can be used without any specific limitations so long as they do not affect battery reactions. One of these components may be used individually, or two or more of these components may be used in combination in a freely selected ratio.

### «Phenolic antioxidant»

The phenolic antioxidant is not specifically limited and can, for example, be a hindered phenolic antioxidant. More specifically, the hindered phenolic antioxidant may be an oligomeric hindered phenol (butylated reaction product of DCPD and p-cresol), 4-[[4,6-bis(octylthio)-1,3,5-triazin-2-yl]amino]-2,6-di-tert-butylphenol, 2,6-di-tert-butyl-p-cresol, stearyl 3-(3,5-di-tert-butyl-4-hydroxyphenyl)propionate, pentaerythritol tetrakis[3-(3,5-di-tert-butyl-4-hydroxyphenyl)propionate], 2,4,6-tris(3',5'-di-tert-butyl-4'-hydroxybenzyl)mesitylene, or the like. Of these hindered phenolic antioxidants, an oligomeric hindered phenol (butylated reaction product of DCPD and p-cresol) and 4-[[4,6-bis(octylthio)-1,3,5-triazin-2-yl]amino]-2,6-di-tertbutylphenol are more preferable from a viewpoint of improving peel strength of a negative electrode. One of these antioxidants may be used individually, or two or more of these antioxidants may be used in combination.

The content of the phenolic antioxidant in the presently disclosed binder composition is preferably more than 0.1 parts by mass, more preferably 0.3 parts by mass or more, and even more preferably 0.5 parts by mass or more per 100 parts by mass of the particulate binder (based on solid content), and is preferably 3 parts by mass or less, more preferably 2 parts by mass or less, and even more preferably 1 part by mass or less per 100 parts by mass of the particulate binder (based on solid content). When the content of the phenolic antioxidant is not less than any of the lower limits set forth above, peel strength of a negative electrode can be even further improved. Moreover, when the content of the phenolic antioxidant is not more than any of the upper limits set forth above, electrolyte solution injectability of a negative electrode can be further improved, and internal resistance of a secondary battery can be further reduced.

### <Production of binder composition>

The presently disclosed binder composition can be produced by mixing the previously described particulate binder, the previously described anionic aromatic compound having 4n+2 ring π electrons that is an aromatic ring-fused nitrogen-containing five-membered ring compound or an aromatic-substituted nitrogen-containing five-membered ring compound, and other components that are optionally used, in the presence of an aqueous medium, without any specific limitations. Note that in a situation in which a dispersion liquid of the particulate binder is used in production of the binder composition, liquid content of this dispersion liquid may be used as the aqueous medium of the binder composition.

### <Properties of binder composition>

The pH of the presently disclosed binder composition is preferably 7 or higher, and is preferably 10 or lower, and preferably 9 or lower. When the pH of the binder composition is 7 or higher, peel strength of a negative electrode can be further improved. Moreover, when the pH of the binder composition is 10 or lower, it is possible to further improve stability of a slurry composition and further reduce the tendency of a negative electrode active material to be influenced by the slurry composition when the negative electrode active material is compounded with the slurry composition.

Note that no specific limitations are placed on the method by which the pH of the binder composition is adjusted. For example, an alkali aqueous solution such as an alkali metal aqueous solution, an alkali metal hydrogen carbonate aqueous solution, or ammonia aqueous solution may be added in a situation in which the pH is to be increased. The use of ammonia aqueous solution is particularly preferable.

The presently disclosed binder composition may have a conductive additive compounded therewith and then be used as a material in formation of an undercoat layer of a secondary battery, for example, but is not specifically limited to being used in this manner. Alternatively, the presently disclosed binder composition may be used as a material in production of a slurry composition for a secondary battery negative electrode as described below.

### (Slurry composition for non-aqueous secondary battery negative electrode)

The presently disclosed slurry composition contains the presently disclosed binder composition and optionally further contains a negative electrode active material, other components, and so forth. In other words, the presently disclosed slurry composition normally contains the previously described particulate binder and the previously described anionic aromatic compound having 4n+2 ring π electrons that is an aromatic ring-fused nitrogen-containing five-membered ring compound or an aromatic-substituted nitrogen-containing five-membered ring compound, and optionally contains a negative electrode active material and other components. By using the presently disclosed slurry composition, it is possible to produce a negative electrode that has excellent electrolyte solution injectability and peel strength and that can reduce internal resistance of a secondary battery.

Although the following describes, as one example, a case in which the slurry composition for a non-aqueous secondary battery negative electrode is a slurry composition for a lithium ion secondary battery negative electrode, the presently disclosed slurry composition for a non-aqueous secondary battery negative electrode is not limited to the following example.

### <Negative electrode active material>

The negative electrode active material used in the presently disclosed slurry composition may be a carbon-based negative electrode active material, a metal-based negative electrode active material, a negative electrode active material that is a combination thereof, or the like, for example.

The term "carbon-based negative electrode active material" refers to an active material having a main framework of carbon into which lithium can be inserted (also referred to as "doping"). The carbon-based negative electrode active material may be a carbonaceous material or a graphitic material, for example.

A carbonaceous material is a material with a low degree of graphitization (i.e., low crystallinity) that is obtained by carbonizing a carbon precursor by heat treatment at 2000°C or lower. The lower limit of the heat treatment temperature in the carbonization is not specifically limited and may, for example, be 500°C or higher.

Examples of the carbonaceous material include graphitizing carbon whose carbon structure can easily be changed according to the heat treatment temperature and non-graphitizing carbon typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

A graphitic material is a material having high crystallinity of a similar level to graphite that is obtained by heat-treating graphitizing carbon at 2000°C or higher. The upper limit of the heat treatment temperature is not specifically limited and may, for example, be 5000°C or lower.

Examples of the graphitic material include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

The term "metal-based negative electrode active material" refers to an active material that contains metal, the structure of which usually contains an element that allows insertion of lithium, and that has a theoretical electric capacity per unit mass of 500 mAh/g or more when lithium is inserted. Examples of metal-based negative electrode active materials include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti) and alloys thereof, and oxides, sulfides, nitrides, silicides, carbides, and phosphides of any of the preceding examples. Of these metal-based negative electrode active materials, active materials containing silicon (silicon-based negative electrode active materials) are preferred. The capacity of a lithium ion secondary battery can be increased by using a silicon-based negative electrode active material.

The silicon-based negative electrode active material may be silicon (Si), a silicon-containing alloy, SiO, SiOₓ, a composite of a Si-containing material and conductive carbon obtained by coating or combining the Si-containing material with the conductive carbon, or the like, for example. One of these silicon-based negative electrode active materials may be used individually, or two or more of these silicon-based negative electrode active materials may be used in combination.

The silicon-containing alloy may be an alloy composition that contains silicon, aluminum, and a transition metal such as iron, and that further contains rare earth elements such as tin and yttrium.

SiOₓ is a compound that includes Si and at least one of SiO and SiO₂, where x is normally not less than 0.01 and less than 2. SiOₓ can for example be formed by utilizing a disproportionation reaction of silicon monoxide (SiO). Specifically, SiOₓ can be prepared by heat-treating SiO, optionally in the presence of a polymer such as polyvinyl alcohol, to produce silicon and silicon dioxide. After SiO has optionally been pulverized and mixed with the polymer, the heat treatment can be performed at a temperature of 900°C or higher, and preferably 1000°C or higher, in an atmosphere containing organic gas and/or vapor.

In the presently disclosed slurry composition, it is preferable that a graphitic material or a silicon-based negative electrode active material is used as the negative electrode active material, and more preferable that a graphitic material is used as the negative electrode active material. One negative electrode active material may be used individually, or two or more negative electrode active materials may be used in combination.

### <Binder composition>

The binder composition compounded in the presently disclosed slurry composition is the presently disclosed binder composition that contains at least the previously described particulate binder and the previously described anionic aromatic compound having 4n+2 ring π electrons that is an aromatic ring-fused nitrogen-containing five-membered ring compound or an aromatic-substituted nitrogen-containing five-membered ring compound.

The content of the particulate binder in the presently disclosed slurry composition is preferably 0.5 parts by mass or more, more preferably 0.7 parts by mass or more, and even more preferably 1 part by mass or more per 100 parts by mass of the negative electrode active material, and is preferably 3 parts by mass or less, more preferably 2.5 parts by mass or less, and even more preferably 2 parts by mass or less per 100 parts by mass of the negative electrode active material. When the content of the particulate binder is not less than any of the lower limits set forth above, peel strength of a negative electrode can be further improved. Moreover, when the content of the particulate binder is not more than any of the upper limits set forth above, electrolyte solution injectability of a negative electrode can be further improved, and internal resistance of a secondary battery can be further reduced.

### <Other components>

Examples of other components that can be compounded in the presently disclosed slurry composition include, but are not specifically limited to, the same other components as can be compounded in the presently disclosed binder composition. One of these components may be used individually, or two or more of these components may be used in combination.

### <Production of slurry composition for non-aqueous secondary battery negative electrode>

The presently disclosed slurry composition can be produced by dispersing the above-described components in an aqueous medium serving as a dispersion medium. Specifically, the slurry composition can be produced by mixing the above-described components and the aqueous medium using a mixer such as a ball mill, a sand mill, a bead mill, a pigment disperser, a grinding machine, an ultrasonic disperser, a homogenizer, a planetary mixer, or a FILMIX.

Although water is normally used as the aqueous medium, alternatively, an aqueous solution of any compound or a mixed solution of a small amount of an organic medium and water may be used. Note that water used as the aqueous medium may include water that was contained in the binder composition.

### (Negative electrode for non-aqueous secondary battery)

The presently disclosed negative electrode for a non-aqueous secondary battery includes a negative electrode mixed material layer formed using the presently disclosed slurry composition that contains the presently disclosed binder composition and a negative electrode active material. Consequently, the negative electrode mixed material layer contains at least a particulate binder, an anionic aromatic compound having 4n+2 ring π electrons that is an aromatic ring-fused nitrogen-containing five-membered ring compound or an aromatic-substituted nitrogen-containing five-membered ring compound, and a negative electrode active material and can optionally contain other components.

It should be noted that components contained in the negative electrode mixed material layer are components that were contained in the presently disclosed slurry composition, and the preferred ratio of these components is the same as the preferred ratio of the components in the presently disclosed slurry composition.

Also note that the particulate binder may have a particulate form or any other form in the negative electrode mixed material layer that is formed using the presently disclosed slurry composition.

As a result of the presently disclosed negative electrode for a non-aqueous secondary battery including a negative electrode mixed material layer that has been formed using the presently disclosed slurry composition, the presently disclosed negative electrode for a non-aqueous secondary battery has excellent electrolyte solution injectability and peel strength and can reduce internal resistance of a secondary battery.

### <Production method of negative electrode for non-aqueous secondary battery>

No specific limitations are placed on the method by which the negative electrode for a non-aqueous secondary battery set forth above is produced. For example, the negative electrode for a non-aqueous secondary battery can be efficiently produced by the presently disclosed method of producing a negative electrode for a non-aqueous secondary battery, which includes forming a negative electrode mixed material layer using a slurry composition that contains the presently disclosed binder composition and a negative electrode active material. The presently disclosed method of producing a negative electrode for a non-aqueous secondary battery may, for example, be a method including a step of applying the slurry composition (application step) and a step of drying the applied slurry composition on a current collector to form a negative electrode mixed material layer on the current collector (drying step).

### [Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition for a negative electrode may be applied onto one side or both sides of the current collector. The thickness of the slurry coating on the current collector after application but before drying may be set as appropriate in accordance with the thickness of the negative electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. Of these materials, copper foil is particularly preferable as a current collector used for a negative electrode. One of these materials may be used individually, or two or more of these materials may be used in combination in a freely selected ratio.

### [Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. By drying the slurry composition on the current collector in this manner, it is possible to form a negative electrode mixed material layer on the current collector and thereby obtain a negative electrode for a non-aqueous secondary battery that includes the current collector and the negative electrode mixed material layer.

After the drying step, the negative electrode mixed material layer may be further subjected to a pressing process by mold pressing, roll pressing, or the like. The pressing process can improve close adherence between the negative electrode mixed material layer and the current collector. The presently disclosed negative electrode for a non-aqueous secondary battery has excellent electrolyte solution injectability even after the pressing process as a result of being produced using the presently disclosed slurry composition.

### (Non-aqueous secondary battery)

The presently disclosed non-aqueous secondary battery includes a positive electrode, a negative electrode, an electrolyte solution, and a separator, and has the presently disclosed negative electrode for a non-aqueous secondary battery as the negative electrode. Moreover, the presently disclosed non-aqueous secondary battery has reduced internal resistance as a result of including the presently disclosed negative electrode for a non-aqueous secondary battery set forth above.

Although the following describes, as one example, a case in which the non-aqueous secondary battery is a lithium ion secondary battery, the presently disclosed non-aqueous secondary battery is not limited to the following example.

### <Positive electrode>

The positive electrode of the lithium ion secondary battery may be any known positive electrode that is used as a positive electrode for a lithium ion secondary battery. Specifically, the positive electrode that is used may for example be a positive electrode obtained by forming a positive electrode mixed material layer on a current collector.

The current collector may be made of a metal material such as aluminum. The positive electrode mixed material layer may be a layer containing a known positive electrode active material, conductive material, and binder.

### <Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferred as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

### <Separator>

The separator may be any of those described in JP2012-204303A, for example. Of these separators, a microporous membrane made of polyolefinic resin (polyethylene, polypropylene, polybutene, or polyvinyl chloride) is preferred since such a membrane can reduce the total thickness of the separator, which increases the ratio of electrode active material in the lithium ion secondary battery, and consequently increases the volumetric capacity.

### (Production method of secondary battery)

The presently disclosed secondary battery can be produced by, for example, stacking the positive electrode and the negative electrode with the separator in-between, performing rolling, folding, or the like of the resultant laminate, as necessary, in accordance with the battery shape to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, a button type, a sheet type, a cylinder type, a prismatic type, a flat type, or the like, for example.

### EXAMPLES

The following provides a more specific description of the present disclosure based on examples. However, the present disclosure is not limited to these examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure and evaluate the volume-average particle diameter of a particulate binder, the electrolyte solution injectability of a negative electrode, the peel strength of a negative electrode, the internal resistance of a secondary battery, and the cycle characteristics of a secondary battery.

### <Volume-average particle diameter of particulate binder>

The volume-average particle diameter of a particulate binder was measured using a laser diffraction particle size analyzer (produced by Shimadzu Corporation; product name: SALD-2300). Specifically, a water dispersion of the particulate binder was prepared, a particle size distribution (by volume) was measured using the aforementioned analyzer, and the volume-average particle diameter of the particulate binder was determined.

### <Electrolyte solution injectability of negative electrode>

A pipettor was used to drip 10 µL of propylene carbonate as an electrolyte solution onto an obtained negative electrode inside a dry room (dew point: -50°C or lower), and then a transparent hemispherical cover (∅10 mm made of plastic) was placed over the electrolyte solution. The time required for the electrolyte solution on the negative electrode to disappear was visually measured. When the electrolyte solution disappears in a shorter time, this indicates that the negative electrode has higher injectability.
A: Disappearance time of not less than 0 seconds and less than 60 seconds
B: Disappearance time of not less than 60 seconds and less than 120 seconds
C: Disappearance time of 120 seconds or more

### <Peel strength of negative electrode>

A produced negative electrode was dried inside a 100°C vacuum dryer for 1 hour, and then the dried negative electrode was cut out as a rectangle of 100 mm in length and 10 mm in width to obtain a test specimen. The test specimen was placed with the surface of the negative electrode mixed material layer facing downward, and cellophane tape was affixed to the surface of the negative electrode mixed material layer. Tape prescribed by JIS Z1522 was used as the cellophane tape. Moreover, the cellophane tape was fixed to a test stage in advance. Thereafter, one end of the current collector was pulled vertically upward at a pulling speed of 50 mm/min to peel off the current collector, and the stress during this peeling was measured. Three measurements were made in this manner, an average value of these measurements was determined, and the average value was taken to be the peel strength and was evaluated by the following standard. A larger peel strength indicates larger binding force of the negative electrode mixed material layer to the current collector, and thus indicates stronger close adherence.
A: Peel strength of 30 N/m or more.
B: Peel strength of not less than 15 N/m and less than 30 N/m
C: Peel strength of less than 15 N/m

### <Internal resistance of secondary battery>

IV resistance was measured as follows in order to evaluate internal resistance of a lithium ion secondary battery. The lithium ion secondary battery was subjected to conditioning through three cycles of an operation of charging to a voltage of 4.2 V with a charge rate of 0.1C, resting for 10 minutes, and then constant current (CC) discharging to 3.0 V with a discharge rate of 0.1C at a temperature of 25°C. Thereafter, the lithium ion secondary battery was CCCV charged to 3.75 V at 1C (C is a value expressed by rated capacity (mA)/1 hour (h)) in a 25°C atmosphere and was then subjected to 30 seconds of charging and 30 seconds of discharging centered on 3.75 V at each of 0.5C, 1.0C, 1.5C, and 2.0C in an atmosphere having a temperature of -10°C. The battery voltage after 15 seconds at the charging side was plotted against the current value for each of these cases, and the gradient of this plot was determined as the IV resistance (Ω). The obtained value (Ω) for IV resistance was evaluated by the following standard using the value for IV resistance in Comparative Example 1 as a reference (100%). A smaller value for IV resistance indicates that the secondary battery has lower internal resistance.
A: Less than 85% relative to IV resistance in Comparative Example 1
B: Not less than 85% and less than 95% relative to IV resistance in Comparative Example 1
C: Not less than 95% and less than 105% relative to IV resistance in Comparative Example 1
D: 105% or more relative to IV resistance in Comparative Example 1

### <Cycle characteristics of secondary battery>

A lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, the lithium ion secondary battery was constant current (CC) constant voltage (CV) charged (upper limit cell voltage 4.20 V) by a 0.2C constant-current method and then CC discharged to 3.00 V by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. The discharge capacity of the 1^{st} cycle was defined as X1 and the discharge capacity of the 100^{th} cycle was defined as X2.

A capacity change rate indicated by ΔC' = (X2/X1) × 100(%) was calculated using the discharge capacity X1 and the discharge capacity X2 and was evaluated by the following standard. A larger value for the capacity change rate ΔC' indicates better cycle characteristics.
A: ΔC' of 93% or more
B: ΔC' of not less than 90% and less than 93%
C: ΔC' of not less than 87% and less than 90%

### (Example 1)

### <Production of binder composition for negative electrode>

A 5 MPa pressure-resistant vessel A equipped with a stirrer was charged with 150 parts of deionized water, 2.5 parts of sodium dodecylbenzenesulfonate aqueous solution (concentration 10%) as an emulsifier, 60 parts of styrene as an aromatic vinyl monomer, 3.5 parts of itaconic acid as a carboxy group-containing monomer, 1 part of 2-hydroxyethyl acrylate as a hydroxy group-containing monomer, and 0.5 parts of t-dodecyl mercaptan as a molecular weight modifier in this order. Next, gas inside the reactor was purged three times with nitrogen, and then 35 parts of 1,3-butadiene was added as an aliphatic conjugated diene monomer. The reactor was held at 60°C while adding 0.5 parts of potassium persulfate as a polymerization initiator so as to initiate a polymerization reaction that was then continued under stirring. At the point at which the polymerization conversion rate reached 96%, cooling was performed and 0.1 parts of hydroquinone aqueous solution (concentration 10%) was added as a polymerization inhibitor so as to quench the reaction. Thereafter, residual monomer was removed using a rotary evaporator having a water temperature of 60°C to yield a water dispersion of a polymer. This water dispersion was subsequently cooled, and then 1 part of a dispersion of an oligomeric hindered phenolic antioxidant (butylated reaction product of DCPD and p-cresol; produced by Chukyo Yushi Co., Ltd.; product name: Wingstay L) as a phenolic antioxidant and 1.5 parts of benzotriazole as an anionic aromatic compound were added to yield a water dispersion containing a particulate binder, a phenolic antioxidant, and an anionic aromatic compound. Thereafter, 1% ammonia aqueous solution was added so as to adjust the pH of the water dispersion to 8 and obtain a binder composition for a negative electrode.

### <Production of slurry composition for negative electrode>

A planetary mixer equipped with a disper blade was charged with 100 parts of artificial graphite (tap density: 0.85 g/cm³; capacity: 360 mAh/g) as a negative electrode active material, 1 part of carbon black (produced by Timcal Ltd.; product name: Super C65) as a conductive material, and 1.2 parts in terms of solid content of a 2% aqueous solution of carboxymethyl cellulose (produced by Nippon Paper Industries Co., Ltd.; product name: MAC-350HC) as a water-soluble polymer to obtain a mixture. The obtained mixture was adjusted to a solid content concentration of 60% with deionized water and was subsequently mixed at 25°C for 60 minutes. Next, the solid content concentration was adjusted to 52% with deionized water, and then a further 15 minutes of mixing was performed at 25°C to obtain a mixture. Deionized water and 2.0 parts in terms of solid content of the binder composition for a negative electrode produced as described above were added to the obtained mixture, and the final solid content concentration was adjusted to 48%. After a further 10 minutes of mixing, defoaming treatment was performed under reduced pressure to yield a slurry composition for a negative electrode having good fluidity.

### <Formation of negative electrode>

The obtained slurry composition for a negative electrode was applied onto copper foil of 15 µm in thickness serving as a current collector by a comma coater such as to have a coating weight after drying of 11 mg/cm². The applied slurry composition for a negative electrode was then dried by conveying the copper foil inside a 60°C oven for 2 minutes at a speed of 0.5 m/min. Thereafter, 2 minutes of heat treatment was performed at 120°C to obtain a negative electrode web.

This negative electrode web was rolled by roll pressing to obtain a negative electrode having a negative electrode mixed material layer density of 1.75 g/cm³.

### <Formation of positive electrode>

A slurry composition for a positive electrode was obtained by mixing 100 parts of LiCoO₂ having a median diameter of 12 µm as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent, adjusting these materials to a total solid content concentration of 70%, and then mixing these materials in a planetary mixer.

The obtained slurry composition for a positive electrode was applied onto aluminum foil of 20 µm in thickness serving as a current collector by a comma coater such as to have a coating weight after drying of 23 mg/cm². The applied slurry composition for a positive electrode was then dried by conveying the aluminum foil inside a 60°C oven for 2 minutes at a speed of 0.5 m/min. Thereafter, 2 minutes of heat treatment was performed at 120°C to obtain a positive electrode web.

This positive electrode web was rolled by roll pressing to obtain a positive electrode having a positive electrode mixed material layer density of 4.0 g/cm³.

### <Preparation of separator>

A separator made of a single layer of polypropylene (produced by Celgard, LLC.; product name: Celgard 2500) was prepared as a separator formed of a separator substrate.

### <Production of lithium ion secondary battery>

The separator (polypropylene microporous membrane of 20 µm in thickness) was placed between the post-pressing positive electrode and the post-pressing negative electrode produced as described above such as to have an order of separator/positive electrode/separator/negative electrode, and thereby obtain a laminate. Next, the laminate of electrodes and separators was wound up around a core of 20 mm in diameter so as to obtain a roll including a positive electrode, a separator, and a negative electrode. The obtained roll was then compressed to a thickness of 4.5 mm from one direction at a rate of 10 mm/s to obtain a flattened roll. Note that the flattened roll had an elliptical shape in plan view and that the ratio of the major axis and the minor axis (major axis/minor axis) was 7.7.

In addition, a non-aqueous electrolyte solution (LiPF₆ solution of 1.0 M in concentration; solvent: mixed solvent of ethylene carbonate (EC)/ethyl methyl carbonate (EMC) = 3/7 (mass ratio) having 2 volume% of vinylene carbonate (VC) further added as an additive) was prepared.

Next, the flattened roll was housed inside a laminate case made of aluminum together with the non-aqueous electrolyte solution. After connecting a negative electrode lead and a positive electrode lead at specific positions, an opening of the laminate case was heat sealed to thereby produce a laminate-type lithium ion secondary battery as a non-aqueous secondary battery. Note that the obtained secondary battery had a pouch shape of 35 mm (width) × 48 mm (height) × 5 mm (thickness) and had a nominal capacity of 700 mAh.

Internal resistance and cycle characteristics were evaluated for the obtained lithium ion secondary battery. The results are shown in Table 1.

### (Examples 2 and 3)

A binder composition for a negative electrode, a slurry composition for a negative electrode, a negative electrode, a positive electrode, and a lithium ion secondary battery were produced in the same way as in Example 1 with the exception that the amount of benzotriazole serving as an anionic aromatic compound was changed as indicated in Table 1. Evaluations were conducted in the same manner as in Example 1. The results are shown in Table 1.

### (Example 4)

A binder composition for a negative electrode, a slurry composition for a negative electrode, a negative electrode, a positive electrode, and a lithium ion secondary battery were produced in the same way as in Example 1 with the exception that benzotriazole serving as an anionic aromatic compound was changed to benzimidazole. Evaluations were conducted in the same manner as in Example 1. The results are shown in Table 1.

### (Example 5)

A binder composition for a negative electrode, a slurry composition for a negative electrode, a negative electrode, a positive electrode, and a lithium ion secondary battery were produced in the same way as in Example 1 with the exception that benzotriazole serving as an anionic aromatic compound was changed to 7-methyl-1H-benzotriazole. Evaluations were conducted in the same manner as in Example 1. The results are shown in Table 1.

### (Example 6)

A binder composition for a negative electrode, a slurry composition for a negative electrode, a negative electrode, a positive electrode, and a lithium ion secondary battery were produced in the same way as in Example 1 with the exception that benzotriazole serving as an anionic aromatic compound was changed to indole. Evaluations were conducted in the same manner as in Example 1. The results are shown in Table 1.

### (Example 7)

A binder composition for a negative electrode, a slurry composition for a negative electrode, a negative electrode, a positive electrode, and a lithium ion secondary battery were produced in the same way as in Example 1 with the exception that artificial graphite and 10% of SiOₓ as a silicon-based negative electrode active material were used in combination as a negative electrode active material. Evaluations were conducted in the same manner as in Example 1. The results are shown in Table 1.

### (Example 8)

A slurry composition for a negative electrode, a negative electrode, a positive electrode, and a lithium ion secondary battery were produced in the same way as in Example 1 with the exception that a binder composition for a negative electrode produced as described below was used. Evaluations were conducted in the same manner as in Example 1. The results are shown in Table 1.

### <Production of binder composition for negative electrode (batch polymerization)>

A 5 MPa pressure-resistant vessel A equipped with a stirrer was charged with 28 parts of styrene as an aromatic vinyl monomer, 70 parts of isoprene as an aliphatic conjugated diene monomer, 2 parts of methacrylic acid as a carboxy group-containing monomer, 0.6 parts of an alkyl diphenyl ether disulfonate as an emulsifier, 137 parts of deionized water, and 0.3 parts of potassium persulfate as a polymerization initiator. These materials were thoroughly stirred, and were then heated to 45°C to initiate polymerization and reacted for 20 hours. Next, these materials were heated to 60°C and were further reacted for 5 hours. At the point at which the polymerization conversion rate reached 97%, cooling was performed to quench the reaction to yield a mixture containing a particulate binder. Unreacted monomer was subsequently removed through thermal-vacuum distillation. Next, 1 part of the same dispersion of a phenolic antioxidant as used in Example 1 and 1.5 parts of benzotriazole as an anionic aromatic compound were added to the mixture containing the particulate binder so as to obtain a water dispersion containing a particulate binder, a phenolic antioxidant, and an anionic aromatic compound. The mixture was then adjusted to pH 8 through addition of 1% ammonia aqueous solution to obtain a binder composition for a negative electrode.

### (Example 9)

A binder composition for a negative electrode, a slurry composition for a negative electrode, a negative electrode, a positive electrode, and a lithium ion secondary battery were produced in the same way as in Example 1 with the exception that a binder composition for a negative electrode produced as described below was used. Evaluations were conducted in the same manner as in Example 1. The results are shown in Table 1.

### <Production of water dispersion of polymer>

### [Block copolymer cyclohexane solution production step]

A pressure-resistant reactor was charged with 233.3 kg of cyclohexane, 31.03 mmol of N,N,N',N'-tetramethylethylenediamine (hereinafter, referred to as "TMEDA"), and 30.0 kg of styrene as an aromatic vinyl monomer. These materials were stirred at 40°C while adding 1034.5 mmol of n-butyllithium as a polymerization initiator, and then 1 hour of polymerization was performed while raising the temperature to 50°C. The polymerization conversion rate of styrene was 100%. Next, 70.0 kg of 1,3-butadiene as an aliphatic conjugated diene monomer was continuously added into the pressure-resistant reactor over 1 hour while performing temperature control to maintain a temperature of 50°C to 60°C. The polymerization reaction was continued for 1 hour more after addition of the 1,3-butadiene was complete. The polymerization conversion rate of 1,3-butadiene was 100%.

Next, 460.3 mmol of dichlorodimethylsilane as a coupling agent was added into the pressure-resistant reactor and a coupling reaction was carried out for 2 hours to form a styrene-butadiene coupled block copolymer. Thereafter, 2069.0 mmol of methanol was added to the reaction liquid and was thoroughly mixed therewith to deactivate active ends. Next, 0.05 parts of 4-[[4,6-bis(octylthio)-1,3,5-triazin-2-yl]amino]-2,6-di-tert-butylphenol (hindered phenolic antioxidant) as a phenolic antioxidant and 0.09 parts of 3,9-bis(octadecyloxy)-2,4,8,10-tetraoxa-3,9-diphosphaspiro[5.5]undecane as a phosphite antioxidant were added to and mixed with 100 parts of the reaction liquid (containing 30.0 parts of polymer component). The resultant mixed solution was gradually added dropwise into hot water of 85°C to 95°C to cause volatilization of solvent and obtain a precipitate. The precipitate was pulverized and then hot-air dried at 85°C to collect a dried product containing a block copolymer.

The collected dried product was dissolved in cyclohexane to produce a block copolymer cyclohexane solution having a block copolymer concentration of 10.0%.

### [Emulsification step]

Sodium alkylbenzene sulfonate was dissolved in deionized water to produce a 0.3% sodium alkylbenzene sulfonate aqueous solution.

A preliminary mixture was obtained by loading 1,000 g of the obtained block copolymer cyclohexane solution and 1,000 g of the obtained sodium alkylbenzene sulfonate aqueous solution into a tank and stirring these solutions so as to perform preliminary mixing. Next, the preliminary mixture was transferred from the tank to a high-pressure emulsifying/dispersing device (produced by SPX FLOW, Inc.; product name LAB 1000) using a metering pump and was circulated (number of passes: 5) to yield an emulsion in which the preliminary mixture had undergone phase-inversion emulsification.

Next, cyclohexane in the obtained emulsion was evaporated under reduced pressure in a rotary evaporator.

Finally, an upper layer portion was filtered through a 100-mesh screen to obtain a water dispersion (block copolymer latex) containing a block copolymer that had been formed into particles.

### [Graft polymerization and cross-linking step]

Distilled water was added to dilute the obtained block copolymer latex such that the amount of water was 800 parts relative to 100 parts (in terms of solid content) of the particulate block copolymer. The diluted block copolymer latex was loaded into a stirrer-equipped polymerization reactor that had undergone nitrogen purging and was heated to a temperature of 30°C under stirring. In addition, a separate vessel was used to produce a diluted methacrylic acid solution by mixing 10 parts of methacrylic acid as a carboxy group-containing monomer and 90 parts of distilled water. The diluted methacrylic acid solution was added over 30 minutes to the polymerization reactor that had been heated to 30°C so as to add 10 parts of methacrylic acid relative to 100 parts of the block copolymer. Thereafter, 1.0 parts of 3-mercapto-1,2-propanediol was added relative to 100 parts (in terms of solid content) of the block polymer.

Moreover, a separate vessel was used to produce a solution containing 7 parts of distilled water and 0.01 parts of ferrous sulfate (produced by Chubu Chelest Co., Ltd.; product name: FROST Fe) as a reductant. The obtained solution was added into the polymerization reactor, 0.5 parts of 1,1,3,3-tetramethylbutyl hydroperoxide (produced by NOF Corporation; product name: PEROCTA H) was subsequently added as an oxidant, and a reaction was carried out at 30°C for 1 hour and at 70°C for 2 hours. In this manner, cross-linking of the block copolymer was performed and methacrylic acid was graft polymerized with the particulate block copolymer to yield a water dispersion of a polymer. Note that the polymerization conversion rate was 99%.

### [Neutralization with volatile alkali compound]

The pH of the obtained water dispersion of the polymer was adjusted to 8.0 by adding 10% ammonia aqueous solution to the water dispersion of the polymer. Moreover, 1 part of the same dispersion of a hindered phenolic antioxidant as used in Example 1 as a phenolic antioxidant and 1.5 parts of benzotriazole as an anionic aromatic compound were added to the water dispersion of the polymer so as to obtain a water dispersion containing a particulate binder, a phenolic antioxidant, and an anionic aromatic compound as a binder composition for a negative electrode.

### (Comparative Example 1)

A binder composition for a negative electrode, a slurry composition for a negative electrode, a negative electrode, a positive electrode, and a lithium ion secondary battery were produced in the same way as in Example 1 with the exception that an anionic aromatic compound was not used. Evaluations were conducted in the same manner as in Example 1. The results are shown in Table 2.

### (Comparative Example 2)

A binder composition for a negative electrode, a slurry composition for a negative electrode, a negative electrode, a positive electrode, and a lithium ion secondary battery were produced in the same way as in Example 1 with the exception that the amount of benzotriazole serving as an anionic aromatic compound was changed to 0.7 parts per 100 parts of the particulate binder. Evaluations were conducted in the same manner as in Example 1. The results are shown in Table 2.

### (Comparative Example 3)

A binder composition for a negative electrode, a slurry composition for a negative electrode, a negative electrode, a positive electrode, and a lithium ion secondary battery were produced in the same way as in Comparative Example 2 with the exception that the amount of benzotriazole serving as an anionic aromatic compound was changed to 12 parts per 100 parts of the particulate binder. Evaluations were conducted in the same manner as in Example 1. The results are shown in Table 2.

### (Comparative Example 4)

A binder composition for a negative electrode, a slurry composition for a negative electrode, a negative electrode, a positive electrode, and a lithium ion secondary battery were produced in the same way as in Example 1 with the exception that 1.5 parts of 1-cyanoethyl-2-ethyl-4-methylimidazole per 100 parts of the particulate binder was used instead of benzotriazole as an anionic aromatic compound. Evaluations were conducted in the same manner as in Example 1. The results are shown in Table 2.

### (Comparative Example 5)

A binder composition for a negative electrode, a slurry composition for a negative electrode, a negative electrode, a positive electrode, and a lithium ion secondary battery were produced in the same way as in Example 1 with the exception that 0.5 parts of 2-mercaptobenzimidazole per 100 parts of the particulate binder was used instead of benzotriazole as an anionic aromatic compound. Evaluations were conducted in the same manner as in Example 1.

The results are shown in Table 2.

In Table 1, shown below:
"ST" indicates styrene unit;
"BD" indicates 1,3-butadiene unit;
"IP" indicates isoprene unit; and
"CMC" indicates carboxymethyl cellulose.

### [Table 1]

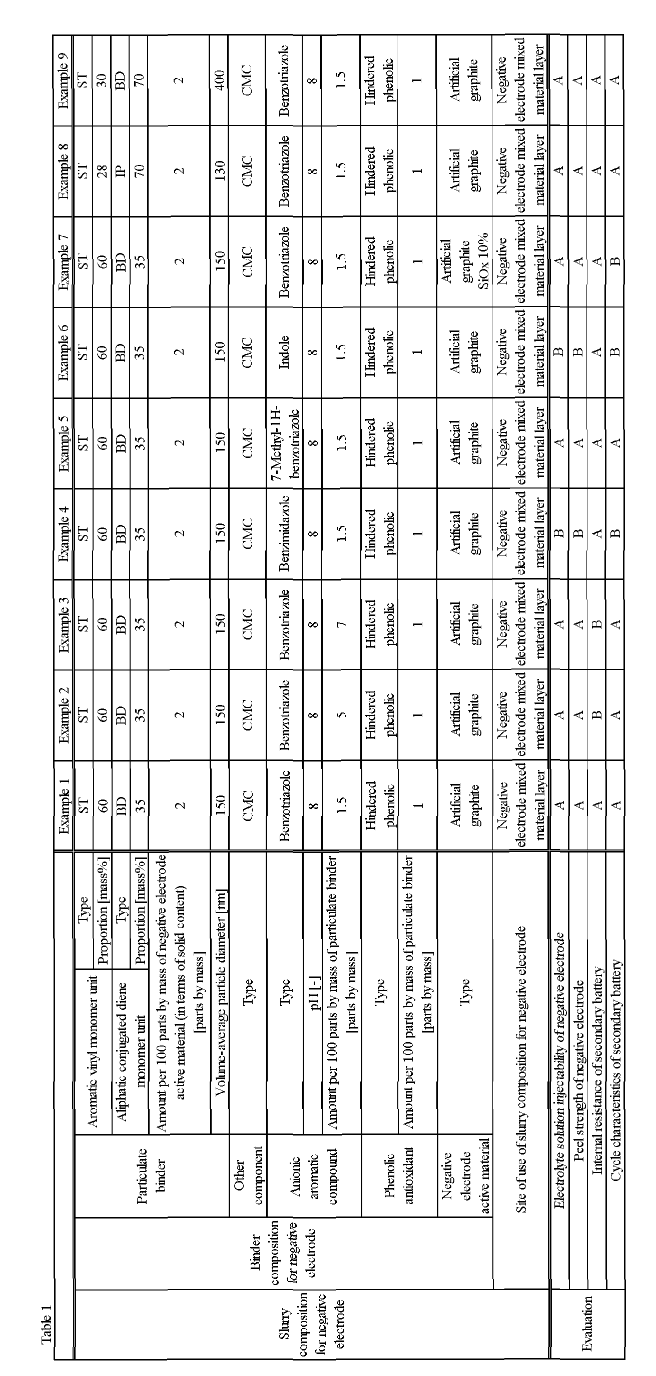

### [Table 2]

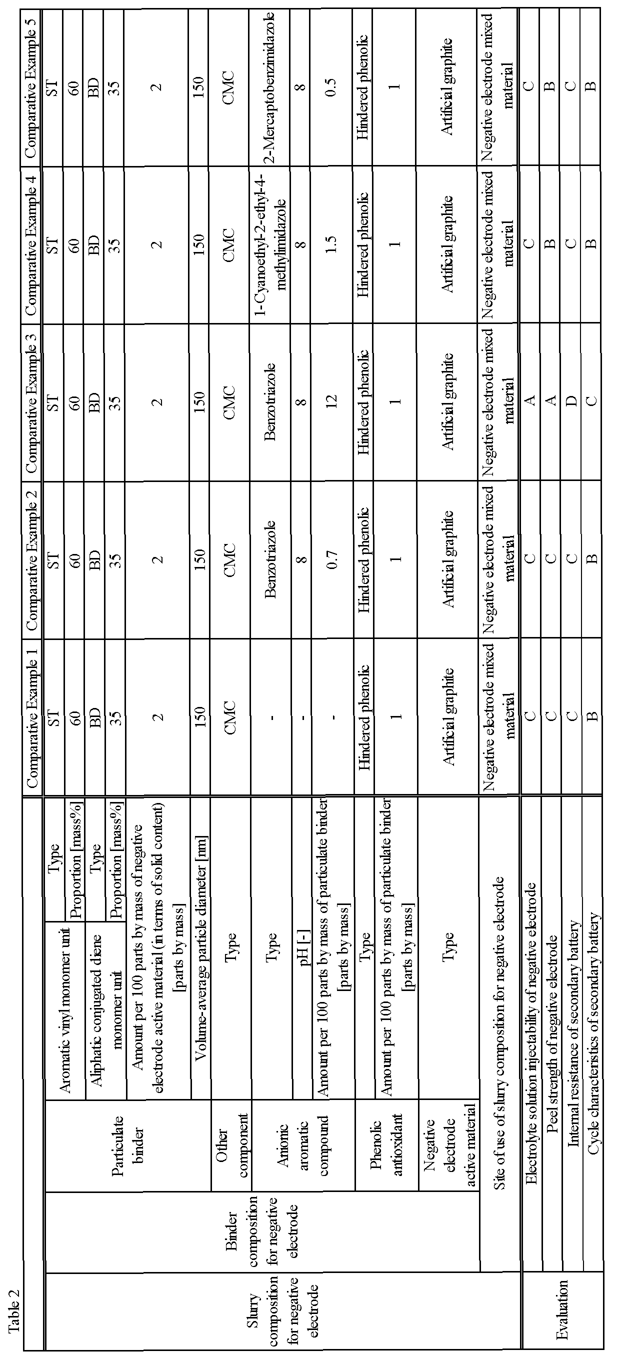

It can be seen from Table 1 that when using a binder composition for a negative electrode that contains a particulate binder including at least an aromatic vinyl monomer unit and an aliphatic conjugated diene monomer unit and an anionic aromatic compound having 4n+2 ring π electrons that is an aromatic ring-fused nitrogen-containing five-membered ring compound or an aromatic-substituted nitrogen-containing five-membered ring compound and that contains more than 1 part by mass and less than 10 parts by mass of the anionic aromatic compound per 100 parts by mass of the particulate binder (Examples 1 to 9), it is possible to produce a negative electrode having excellent electrolyte solution injectability and peel strength and a secondary battery having reduced internal resistance.

In contrast, it can be seen from Table 2 that it is not possible to produce a negative electrode having excellent electrolyte solution injectability and peel strength and a secondary battery having reduced internal resistance when using a binder composition that does not contain the specific anionic aromatic compound described above (Comparative Example 1) and when using a binder composition that contains less than a specific amount of the anionic aromatic compound (Comparative Example 2 and Comparative Example 5).

It can also be seen that a secondary battery having low internal resistance cannot be produced when using a binder composition that contains more than a specific amount of the anionic aromatic compound (Comparative Example 3).

It can also be seen that a negative electrode having excellent electrolyte solution injectability and a secondary battery having low internal resistance cannot be produced when using a binder composition containing an anionic aromatic compound that is not an aromatic ring-fused nitrogen-containing five-membered ring compound or an aromatic-substituted nitrogen-containing five-membered ring compound (Comparative Example 4).

### INDUSTRIAL APPLICABILITY

According to the present disclosure, it is possible to provide a binder composition for a non-aqueous secondary battery negative electrode and a slurry composition for a non-aqueous secondary battery negative electrode that can be used to produce a negative electrode for a non-aqueous secondary battery that has excellent electrolyte solution injectability and peel strength and that can reduce internal resistance of a non-aqueous secondary battery.

Moreover, according to the present disclosure, it is possible to provide a negative electrode for a non-aqueous secondary battery that has excellent electrolyte solution injectability and peel strength and can reduce internal resistance of a non-aqueous secondary battery, and also to provide a method of producing this negative electrode for a non-aqueous secondary battery.

Furthermore, according to the present disclosure, it is possible to provide a non-aqueous secondary battery having reduced internal resistance.

## Claims

1. A binder composition for a non-aqueous secondary battery negative electrode comprising: a particulate binder; and an aromatic ring-fused nitrogen-containing five-membered ring compound or an aromatic-substituted nitrogen-containing five-membered ring compound, wherein
the particulate binder includes at least an aromatic vinyl monomer unit and an aliphatic conjugated diene monomer unit,
the aromatic ring-fused nitrogen-containing five-membered ring compound or the aromatic-substituted nitrogen-containing five-membered ring compound is an anionic aromatic compound having 4n+2 ring π electrons with a proviso that n is an integer of 1 or more, and
content of the anionic aromatic compound is more than 1 part by mass and less than 10 parts by mass per 100 parts by mass of the particulate binder.

2. The binder composition for a non-aqueous secondary battery negative electrode according to claim 1, wherein the anionic aromatic compound is represented by formula (A) or formula (B), shown below, 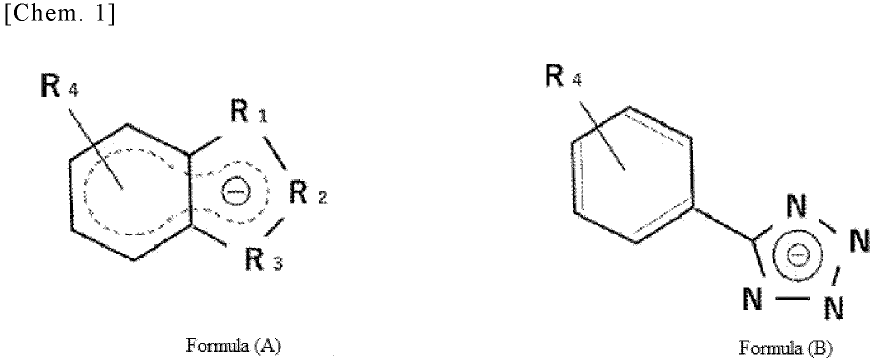 where, in formula (A) and formula (B), R₁ to R₃ are carbon atoms with a proviso that at least one of R₁ to R₃ is a nitrogen atom, and R₄ represents a hydrogen atom or an alkyl group having a carbon number of not less than 1 and not more than 3.

3. The binder composition for a non-aqueous secondary battery negative electrode according to claim 1 or 2, further comprising a phenolic antioxidant.

4. The binder composition for a non-aqueous secondary battery negative electrode according to any one of claims 1 to 3, wherein the anionic aromatic compound includes a pyrrole ring, pyrazole ring, an imidazole ring, a triazole ring, or a tetrazole ring.

5. A slurry composition for a non-aqueous secondary battery negative electrode comprising the binder composition for a non-aqueous secondary battery negative electrode according to any one of claims 1 to 4.

6. The slurry composition for a non-aqueous secondary battery negative electrode according to claim 5, comprising a negative electrode active material.

7. A negative electrode for a non-aqueous secondary battery comprising a negative electrode mixed material layer formed using the slurry composition for a non-aqueous secondary battery negative electrode according to claim 6.

8. A non-aqueous secondary battery comprising the negative electrode for a non-aqueous secondary battery according to claim 7.

9. A method of producing a negative electrode for a non-aqueous secondary battery comprising forming a negative electrode mixed material layer using the slurry composition for a non-aqueous secondary battery negative electrode according to claim 6.
